# EUROPEAN PATENT APPLICATION

(11) **EP 2 367 141 A2**
(43) Date of publication of application: **21.09.2011**
(21) Application number: 11155816.9
(22) Date of filing: 24.02.2011
(51) Int. Cl.: G06K 9/03

(54) **Centralized information processing apparatus and centralized information processing system**

(30) Priority: 17.03.2010 JP 2010061538
(71) Applicant: Kabushiki Kaisha Toshiba, Tokyo 105-8001 (JP)
(72) Inventor: Maeda, Masaya, Minato-ku Tokyo 105-8001 (JP); Irie, Bunpei, Minato-ku Tokyo 105-8001 (JP); HAMAMURA, Tomoyuki, Minato-ku Tokyo 105-8001 (JP)
(74) Representative: Kramer - Barske - Schmidtchen

(57) **Abstract**

According to one embodiment, a centralized information processing apparatus (1) includes an information acquisition unit (10, 11) configured to acquire image data, sorting destinations arranged in a descending order of scores obtained by character recognition and score information items thereof, and sorting information, a recognition-rate processing unit (12) configured to provide information related to a recognition rate for each sorting destination, a changed parameter value acquisition unit (10, 13) configured to acquire a new parameter value, a simulation executing unit (13) configured to execute a simulation of a character recognition process for the image data by using the changed parameter value, a difference list providing unit (14) configured to form and provide a difference list indicating different content between new sorting information obtained as the simulation result and original sorting information, and a parameter changing unit (15) configured to change the parameter value to the new parameter value.

## Description

### FIELD

Embodiments described herein relate generally to a centralized information processing apparatus and centralized information processing system that permit an ordinary user who is not a person skilled in the art to easily enhance the recognition rate of a character written on a paper-like sheet or the like by means of a paper-sheet processing system.

### BACKGROUND

In paper-sheet processing systems now used, for example, a system is provided that reads address information (sorting information) such as dwelling places, addresses and postcodes described on respective paper-like sheets (mail such as postcards or envelopes) by use of an optical character reader (OCR) and sorts the paper-like sheets.

The reading operation of automatically converting an optically read character pattern to a corresponding character code is performed by an image process such as a pattern matching process for referring to a preset dictionary.

In order to enhance the performance of the reading operation, as the technique for updating a weight parameter used for recognition to enhance the recognition rate, various methods are known.

In one of the methods, a parameter in a knowledge database (dictionary or the like) used when a corresponding address is extracted from a candidate character group is adjusted. In another method, the reading operation of a specified dwelling place is more efficiently performed based on time-sequential statistical data by updating a parameter.

### BRIEF DESCRIPTION OF THE DRAWINGS

FIG. 1 is a block diagram showing the schematic configuration of an exemplary centralized information processing system according to one embodiment.
FIG. 2A is a flow diagram for illustrating the schematic operation procedure of an exemplary centralized information processing apparatus according to one embodiment.
FIG. 2B is a flow diagram for illustrating the schematic operation procedure of an exemplary centralized information processing apparatus according to one embodiment.
FIG. 3 is a diagram showing the result of recognition for respective addresses in an example of one embodiment.
FIG. 4 is a diagram showing the content of an exemplary weight parameter file for each address of one embodiment.
FIG. 5 is a diagram showing an exemplary weight parameter change setting screen of one embodiment.
FIG. 6 is a diagram for illustrating an exemplary simulation process of one embodiment.
FIG. 7 is a diagram showing an exemplary difference information display screen of one embodiment.
FIG. 8A is a diagram showing an exemplary recognition change display for each address and erroneous reading change display for each address in one embodiment.
FIG. 8B is a diagram showing an exemplary recognition change display for each address and erroneous reading change display for each address in one embodiment.

### DETAILED DESCRIPTION

In general, according to one embodiment, a centralized information processing apparatus includes an information acquisition unit configured to acquire image data formed by reading sorting information described on a paper-like sheet by use of reading means, sorting destinations arranged in a descending order of scores obtained by character recognition performed for the image data and score information items thereof, and sorting information that is specified based on unrecognizable image data, a recognition-rate processing unit configured to provide information related to a recognition rate for each sorting destination based on the respective information items in a preset period, a changed parameter value acquisition unit configured to acquire a new parameter value obtained by changing the parameter value configuring the score, a simulation executing unit configured to execute a simulation of a character recognition process for the image data by using the changed parameter value, a difference list providing unit configured to form and provide a difference list indicating different content between new sorting information obtained as the simulation result and original sorting information, and urging the user to input information indicating whether the simulation result is accepted, and a parameter changing unit configured to change the parameter value to the new parameter value when information to the effect that the simulation result is accepted is input by the user.

A centralized information processing system according to one embodiment is explained with reference to the accompanying drawings. In the following explanation, the embodiment is explained by taking a paper-like sheet as mail, sorting information as address information and a sorting destination as an address, but this invention is not limited to this embodiment.

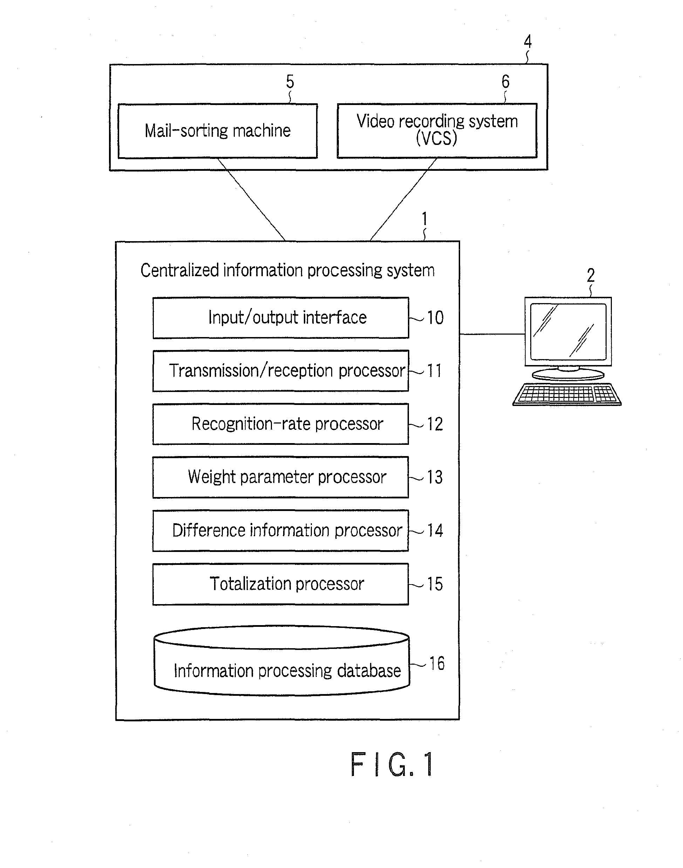

FIG. 1 is a block diagram showing the schematic configuration of an exemplary centralized information processing system according to one embodiment. In the centralized information processing system includes a centralized information processing apparatus 1, input/output device 2, communication path 3 and mail processing system 4. The mail processing system 4 includes a mail-sorting machine 5 and video coding system (VCS) 6.

The centralized information processing apparatus 1 acquires mail processing information from the mail-sorting machine 5 and video coding system 6 via the communication path 3 and supports adjustment of a parameter by the user based on the processing information. The input/output device 2 inputs an instruction of the user to the centralized information processing apparatus 1 and displays output content from the centralized information processing apparatus 1.

The mail-sorting machine 5 reads an address or postcode described on mail such as a postcard or envelope by use of the recognition module of an optical character reader (OCR) and performs a process of sorting the mail for each postcode or for each delivery area according to sorting information corresponding to the read address or postcode.

Mail whose address or postcode was not read by means of the mail-sorting machine 5, that is, mail whose address recognition resulted in failure is rejected in the sorting process. The whole image of the rejected mail is supplied from the mail-sorting machine 5 to the video coding system 6. The video coding system 6 displays the whole images on a display module (not shown) of the video coding system 6 in an order of rejection.

While visually observing the address image (original image read by the OCR) of the rejected mail displayed on the display module of the video coding system 6, the operator manually inputs (performs the coding process for) all of the addresses or postcodes that cannot be read by the mail-sorting machine 5. The mail-sorting machine 5 mechanically sorts the mail according to sorting information corresponding to the address or postcode input by the operator.

The centralized information processing apparatus 1 includes an input/output interface 10, transmission/reception processor 11, recognition rate processor 12, weight parameter processor 13, difference information processor 14, totalization processor 15 and information processing database 20.

The input/output interface 10 is an interface used for information transfer between the input/output device 2 and the mail processing system 4. The transmission/reception processor 11 receives and stores information from the mail processing system 4 and transmits the processing result in the centralized information processing apparatus 1 to the mail processing system 4. The recognition rate processor 12 acquires data of the recognition processing result in the mail processing system 4 to calculate statistical data such as a recognition rate. The weight parameter processor 13 simulates a recognition process when a weight parameter is changed. The difference information processor 14 extracts changing content (difference) of the recognition result accompanied by a change in the weight parameter. The totalization processor 15 totalizes and edits the changing results of the weight parameter. The information processing database 20 stores data related to the operations of the respective portions.

The configuration of the system shown in FIG. 1 is the configuration on the assumption that the respective processes explained below are performed in the centralized information processing apparatus 1. Therefore, the functions of the centralized information processing apparatus 1 may be provided on the mail-sorting machine 5 or video coding system 6 or the functions may be separately provided thereon. This embodiment is explained based on the configuration of FIG. 1.

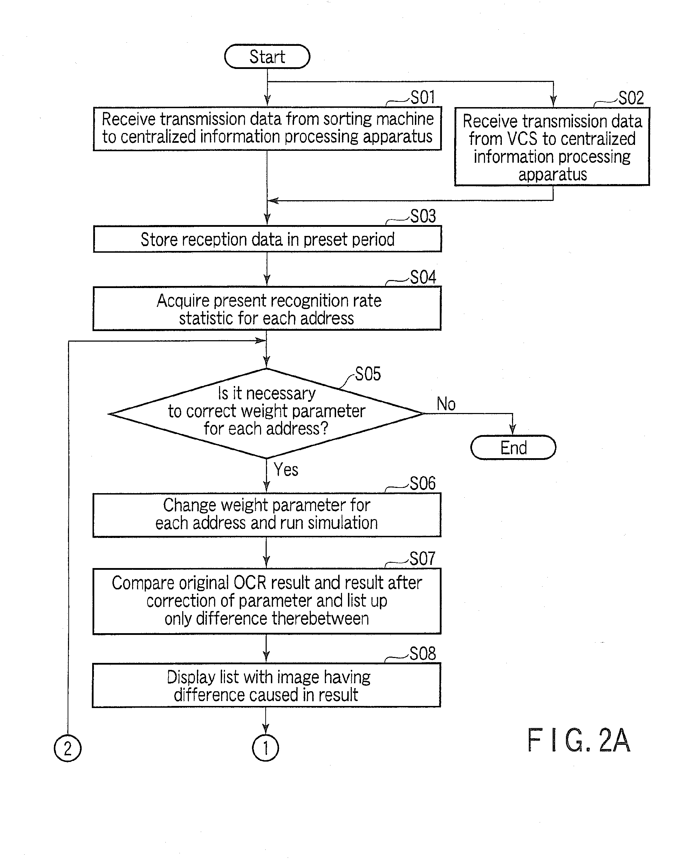

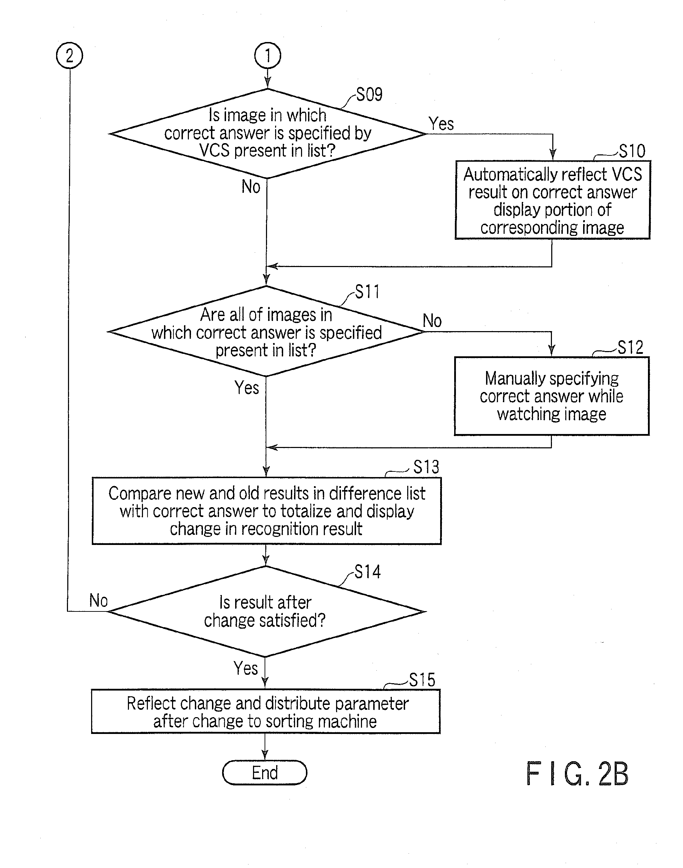

FIG. 2A and FIG. 2B are flow diagrams for illustrating the procedure of the schematic operation of an exemplary centralized information processing apparatus according to one embodiment.

In steps S01, S02, the centralized information processing apparatus 1 receives data from the mail-sorting machine 5 and VCS 6.

As data items transmitted from the mail-sorting machine 5, for example, image data obtained by reading respective mails by use of the OCR, IDs that specify respective mails, recognition results obtained for respective image data items in an order from a higher score position and the like are provided. As data items transmitted from the VCS 6, IDs that specify respective mails, address results instructed (coding-processed) by manual input by the operator and the like are provided. The ID is identification information inherently assigned to image data. Image data may not be whole data read by the OCR but may be data that is obtained by extracting only a dwelling place area portion and includes information based on which the operator can determine a correct dwelling place. Further, an image can be compressed.

The data transmission timings of the mail-sorting machine 5 and VCS 6 are not necessarily set to the same timing. Data items respectively transmitted are set to correspond by use of IDs that specify the respective mails. However, data can be temporarily stored in one of the mail-sorting machine 5 and VCS 6 and then whole data items can be simultaneously received.

In step S03, the transmission/reception processor 11 of the centralized information processing apparatus 1 puts transmitted data items together for respective data items of each ID and stores the data items in the information processing database in a preset period. The storage period may be freely set to one week or one month, for example, by taking the storage capacity and the robust property with respect to variation in the address into consideration. Further, mails such as New Year's mails and year-end gifts in respective seasons may be separately stored for respective determined periods. When a plurality of mail processing systems that are mail reception/transmission objects are present, data may be stored for the respective objects.

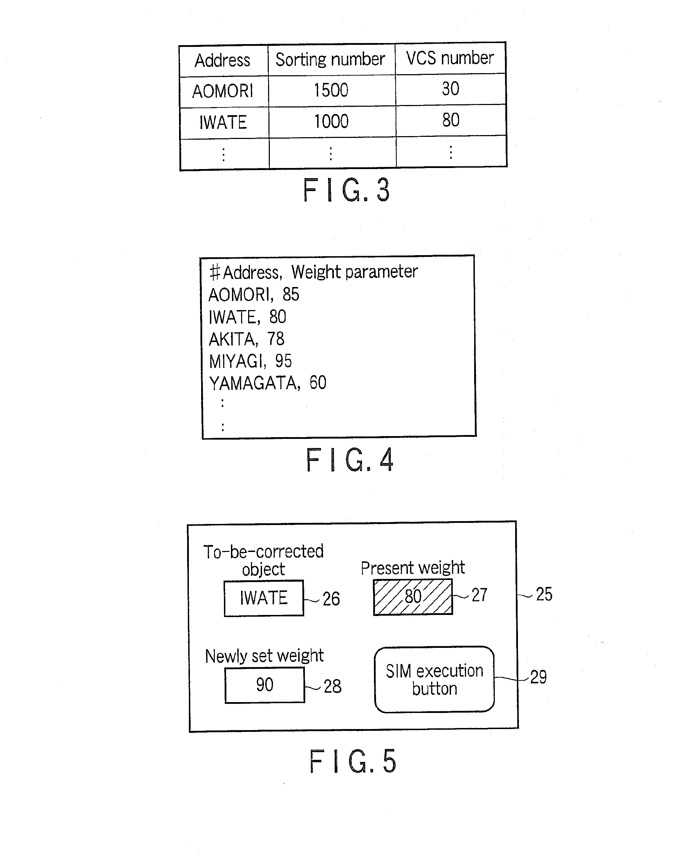

Then, an information processing operation is started for the stored data. In step S04, the recognition rate processor 12 calculates the recognition rate of mail for each address. FIG. 3 is a diagram showing the result of recognition for respective addresses. In this case, the "sorting number" indicates the number of cases in which the mail-sorting machine 5 recognizes the addresses. The "VCS number" indicates the number of cases in which the mail-sorting machine 5 cannot recognize the addresses and rejects the mails and the addresses are assigned by the coding process of the VCS 6. According to the above result, the recognition rate of the mail with the address of "AOMORI" is 1500/1530 = 98% and the recognition rate of the mail with the address of "IWATE" is 1000/1080 = 92.6%. Then, the recognition rate processor 12 displays the recognition result shown in FIG. 3 and the calculated recognition rate on the input/output device 2.

In FIG. 3, the addresses are sorted in the prefecture unit, but any one of the hierarchical layers of the dwelling places may be used. The unit in which mails are sorted and put together can be freely specified by the operator. For example, a desired one of the hierarchical layers of the dwelling place hierarchy may be specified or desired plural ones of the hierarchical layers may be specified. Various specifications may be combined. For example, dwelling places near the processing station may be specified in the finely divided address units and dwelling places that are far apart from the processing station may be specified in the upper layers of the dwelling place hierarchy. In addition, mails can be sorted not in the address unit, but in the postcode unit or name unit.

In step S05, the operator determines based on the result of display whether or not it is required to correct a weight parameter for each address. In the character recognition system of this embodiment, characters that are given as plural candidates are expressed in point (score) and the character of the recognition result is determined based on the score. In order to enhance the reading performance, for example, a mechanism (parameter) that weights and corrects a recognition score of each dwelling place is provided in the mail processing system. The weight parameters for respective addresses are parameters for the addresses. Judging from the result of FIG. 3, when "IWATE" is specified as the address, the rate at which image data is rejected and supplied to the VCS 6 is high (the recognition rate is low). Therefore it is determined to select a weight parameter for the address of "IWATE" as a to-be-adjusted object.

Display content provided for the operator is not limited to content of FIG. 3 if the content can be used to support a narrowing operation for a to-be-adjusted object. Alternatively, the recognition rate itself may be calculated and expressed by use of a line graph. The addresses may be sorted in a descending order of recognition rates. The operator can determine the candidate based on the above statistical information. Further, the operator can narrow to-be-corrected candidates based on sensual desire to limit an erroneous reading operation with respect to a specified address. Further, at least one of candidates with a low recognition rate may be automatically adopted irrespective of the determination by the operator.

If the result of step S05 is Yes, that is, if it is determined necessary to correct a weight parameter for each address, the process of a next step is performed. Otherwise (if the result of step S05 is No), the present process is terminated since the adjustment process is unnecessary. At this time, the parameters are kept unchanged and the original values are maintained. If the parameter required to be corrected is automatically extracted, the parameter that provides a recognition rate less than or equal to a threshold value may be selected.

Next, the weight parameter processor 13 changes the weight parameter for each address and performs a character recognition simulation process in step S06. FIG. 4 is a diagram showing an example of content of a weight parameter file for each address. The weight parameter for each address is one of factor data items used for calculation of a total score. As described above, the addresses are sorted in the prefecture unit, but any part of the dwelling place hierarchy may be used. The unit is not limited to the address and may be set in the postcode unit or name unit. Therefore, the parameters are stored in the information processing database 20 of the centralized information processing apparatus 1. The parameters are not limited to one type and different types of parameters may be used for seasonal mails such as New Year's mails and year-end gifts, for example.

A score for each address is finally corrected based on the character recognition simulation result using a new weight parameter obtained by changing the weight parameter. In this embodiment, the explanation is made based on the simple addition system in which the final recognition result is derived by adding a weight parameter to the recognition score for each address.

As described above, since the present recognition rate in the case of the address of "IWATE" is low, the weight parameter is changed from the present value (for example, 80) to a larger number (for example, 90) when the weight parameter for each address of IWATE is adjusted. The process of changing the parameter is performed according to the following procedure.

The weight parameter processor 13 displays a weight parameter-change setting screen 25 shown in FIG. 5 on the input/output device 2. In the weight parameter-change setting screen 25, a to-be-corrected input column 26, present weight display column 27, newly set weight input column 28 and SIM execution button 29 are provided.

The operator inputs an address to be corrected to the to-be-corrected input column 26. Then, the weight parameter processor 13 searches a weight parameter file for each address and displays a weight parameter set in the input address on the present weight display column 27. Further, the weight parameter processor 13 also displays the content (FIG. 4) of the weight parameter file for each address.

The operator refers to the displayed content of the weight parameter file for each address, compares the same with a parameter of another address and inputs a new weight parameter value to the newly set weight input column 28. Next, if the operator presses the SIM execution button 29, the weight parameter processor 13 executes a simulation by use of the new weight parameter value.

The weight parameter-change setting screen 25 shown in FIG. 5 may be configured to simultaneously change weight parameters for plural addresses.

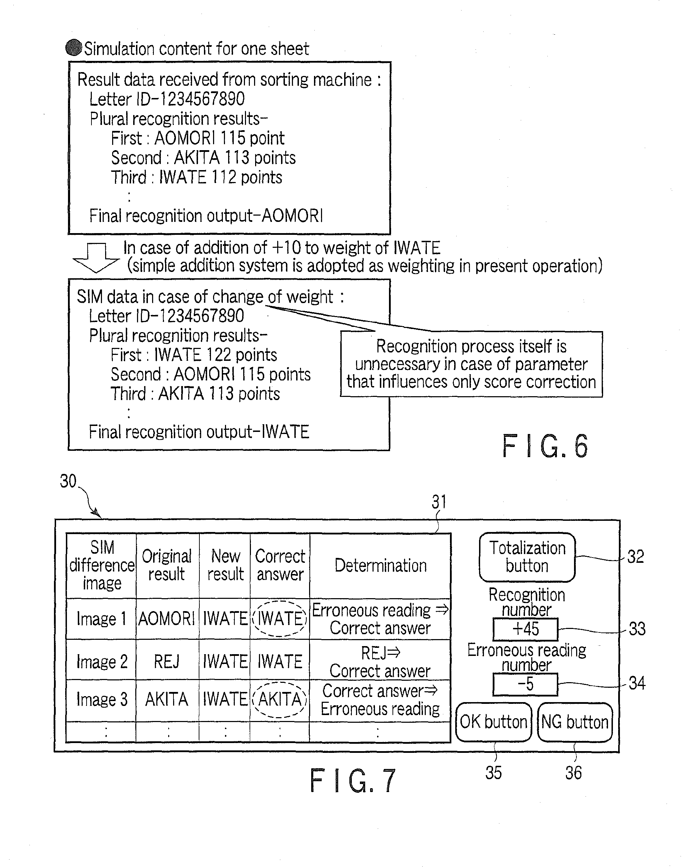

FIG. 6 is a diagram for illustrating an exemplary simulation process of one embodiment. The upper portion of the diagram shows the character recognition processing result by the mail-sorting machine 5 and the lower portion of the diagram shows the simulation result by use of a parameter after being changed.

The character recognition processing result by the mail-sorting machine 5 is data transmitted from the mail-sorting machine 5 as explained in step S01 and is obtained as address recognition results arranged from an upper position of a higher score for each ID to plural positions. In the example shown in FIG. 6, the recognition results of a certain mail by the mail-sorting machine 5 indicate "first: AOMORI 115 points", "second: AKITA 113 points", "third: IWATE 112 points" and "final recognition output: AOMORI". That is, the image of this ID indicates that "AOMORI" with the highest score is adopted as the recognition result since the scores are respectively set to "115 points", "113 points" and "112 points" when the addresses are recognized as "AOMORI", "AKITA" and "IWATE".

On the other hand, 10 is added to a weight parameter value of "IWATE" in the adjustment process. When the correction made by use of the weight parameter is the simple addition system, the simulation result becomes "first: IWATE 122 (=112+10) points), "second: AOMORI: 115 points" and "third: AKITA: 113 points" and "final recognition output: IWATE" is output.

When a parameter that is sufficient to subject only the score thereof to the correction process is changed as in the weight simple addition system shown in the above example, the recognition process itself is unnecessary for the simulation. Only a process of selecting the final recognition result from the results of plural orders becomes necessary. In the process of selecting the final recognition result, "IWATE" is selected as the final recognition result in a condition that the first-order recognition score is not less than 100 and the score difference with respect to the second-order recognition score is two or more. However, the selection process may be performed by executing the same algorithm as that of the selection process in the mail-sorting machine 5.

In this embodiment, the weight parameter value is incremented by +10, but there occurs a possibility that the precision of the character recognition is lowered if the weight change amount is large. Therefore, the restriction may be imposed to set the changing amount of the weight parameter within ±20% of the original value, for example.

In step S07, the difference information processor 14 compares the original OCR result with a result obtained after correcting the parameter and lists up only a portion (difference) in which the recognition result is different.

Then, the above difference output process with respect to one image is repeatedly performed for all of the result data items received from the mail-sorting machine 5 and images in which the final result is different by changing the parameter are listed up. When a difference occurs, the difference information processor 14 stores or records a corresponding image and ID thereof.

Next, in step S08, the difference information processor 14 displays a list of contents of differences with images on the input/output device 2. FIG. 7 is a diagram showing an exemplary difference information display screen of one embodiment. On a difference information display screen 30, a difference list display 31 on which a list of difference images, determination results and the like is displayed, and totalization button 32, recognition number display column 33, erroneous reading number display column 34, OK button 35 and NG button 36 are provided.

Display content of the difference list display 31 is explained below.

In the column of "SIM difference image", images stored or recorded in the process of step S07 are displayed. In the column of "original result", the final result output processed by the mail-sorting machine 5, that is, information indicating the same content as that of "final recognition output" on the upper portion of FIG. 6 is displayed. If the address cannot be specified, "REJ" is displayed, but it is unnecessary to use the character string "REJ" if information indicating that recognition cannot be achieved can be obtained. Further, the sorting process can be performed by coloring the cell. In the column of "new result", the final result output obtained by changing the weight parameter, that is, information indicating the same content as that of "final recognition output" on the lower portion of FIG. 6 is displayed. In the case of the display of the column, if the address is not specified, "REJ" is displayed like the case of display of "original result".

In the column of "correct answer", an address that is the correct answer for the mail is displayed. The display portion is information manually input from the input/output device 2 by the operator. That is, the operator refers to an image displayed in "SIM difference image" to read an address and input the same. At this time, the difference information processor 14 may automatically adopt the coding processing result transmitted from the VCS 6. This operation makes efficient the instructing operation of the operator. In the VCS 6, an address that is the correct answer is already manually input while the operator watches the image and the coding processing result of the ID that coincides with the ID of an image displayed in the difference image list is automatically selected and the operation can be reflected on "correct answer". In the column (cell) that is already reflected on "correct answer", the cell can be made prominent by coloring the cell, the operation of inputting a character string can be made impossible or the display operation thereof can be made impossible.

Next, the processing procedure in step S09 to step S10 that automatically reflects the result of the VCS 6 is described.

When an image in which a correct answer is indicated by the VCS 6 is present on the difference list display 31 (Yes in step S09), the difference information processor 14 automatically reflects the VCS result on a correct answer display portion of a corresponding image.

Further, mail for which an answer is input in the VCS 6 is only mail whose address cannot be specified in the mail-sorting machine 5. Therefore, if mail is recognized in the mail-sorting machine 5 but is erroneously recognized, that is, if mail is erroneously read, the operator refers to an image displayed in "SIM difference image" to input a correct answer.

The procedure of a correct answer input process in step S11 to step S12 is now described.

If one of the cells in the correct answer column of the difference list display 31 in which no information is input is present (Yes in step S11), the operator manually inputs a correct answer while watching the image in step S12. The difference information processor 14 supports the operation as a manually input GUI.

The addresses encircled by dotted-line circles in the "correct answer" column are contents input by the operator while watching the image.

Next, the difference information processor 14 compares the content of the "correct answer" column with "original result" and "new result" to display a change in the final result. Content obtained by comparing "original result" with "correct answer" is displayed in a portion corresponding to the root of the arrow of "determination" and content obtained by comparing "new result" with "correct answer" is displayed in a portion corresponding to the point of the arrow.

As a determination method for the portion corresponding to the root of the arrow, a method for setting the determination result to "REJ" when "original result" or "new result" is "REJ", setting the determination result to "erroneous reading" when "original result" and "new result" are character strings other than "REJ" and "original result" and "correct answer" are different from each other and setting the determination result to "correct answer" when they coincide with each other may be used.

An operation button (not shown) may be provided on the difference information display screen 30 to provide an extraction function of a specified character string and a sort function according to a specified order with respect to display on the difference list display 31. This measure can be recommended because the operation for the difference information display screen 30 can be efficiently performed.

Further, an operation button (not shown) may be provided on the difference information display screen 30 and the content of "determination" that is specified content, for example, the content expressed as "A→B" may be extracted, edited and displayed by the operation of the operator.

When correct answers can be input to all of the cells in the difference image list and all of the determination contents of each sheet are output, the operator presses the totalization button 32. In step S13, the totalization processor 15 compares all of the new and old results of the difference list with the correct answers to totalize and display changes in the recognition result. The totalization processor 15 displays an increase or decrease in the correct answer number before and after the change of the parameter on the recognition number display column 33 and displays an increase or decrease in the erroneous reading number before and after the change of the parameter on the erroneous reading number display column 34. If the operation becomes efficient, the recognition rate and erroneous reading rate are derived based on the above values and the contents may be displayed based on the thus derived recognition rate and erroneous reading rate.

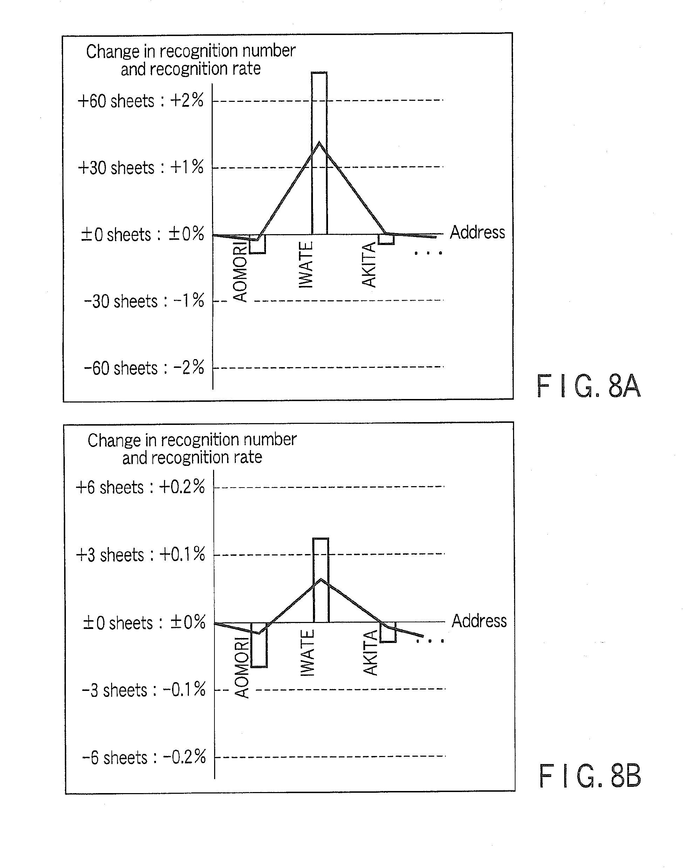

Further, since delivery delays and wasteful cost will occur if a letter with a specified address is erroneously read, it may sometimes become necessary to determine that adjustment needs to be made to avoid the erroneous reading as far as possible. Therefore, recognition change display for each address and erroneous reading change display for each address can be performed together. FIG. 8A, FIG. 8B are diagrams each showing an exemplary recognition change display for each address and erroneous reading change display for each address in one embodiment.

FIG. 8A shows change display for each address of the recognition success rate and recognition success number and FIG. 8B shows change display for each address of the erroneous reading rate and erroneous reading number. Further, a column graph in each diagram indicates a change in the recognition number or erroneous reading number for each address and a line graph indicates a change in the recognition rate or erroneous reading rate for each address.

In FIG. 8A, FIG. 8B, the changes are displayed for respective addresses written on the mails, but mails may be sorted for respective SIM recognition final result outputs erroneously read depending on the operation. For example, the above sorting method is effective in some cases when a trouble occurs if the address is erroneously read as a far dwelling place. Further, if an erroneous reading address item "IWATE" is selected, the erroneous reading factor can be further analyzed by adding a function of displaying an image group obtained by erroneously reading letters addressed to "IWATE".

If the operator determines that the simulation result is satisfied as a whole in the totalization and display operations (Yes in step S14), the operator presses the OK button 35. In step S15, the totalization processor 15 adopts the result after the change and registers the same as a correct weight parameter for each address. If the result after the change cannot be satisfied (No in step S14), the processor repeatedly performs a process starting from the procedure (step S05) of determining whether or not it is necessary to correct the weight parameter for each address.

In step S15, if a finally registered parameter is updated, the transmission/reception processor 11 distributes a parameter after the change to the mail-sorting machine 5. After the parameter distribution, the mail-sorting machine 5 is operated based on the parameter after updating.

For distribution of the parameter after the change, the parameter distribution can be performed in a remote state if the centralized information processing apparatus 1 is installed in a place far apart from the mail processing system and no attention is paid to the communication system. Further, weight parameters for respective different addresses are formed for a New Year's period and normal period and the sorting machine can be operated in the respective periods by first dividing data items distributed from the sorting machine to the centralized information processing system according to periods. Further, weight parameters for respective addresses suitable for the operation of the processing station can be formed by storing the distribution data items separately for the collection times of the morning and night.

In the present embodiment, the process is performed by use of the independent centralized information processing apparatus 1, but it is not always necessary to provide the independent centralized information processing apparatus 1 in an environment in which data held by the mail-sorting machine 5 and VCS 6 can be stored. For example, the simulation operation portion of the centralized information processing apparatus 1 may be operated by the operation from the operation panel of the mail processing system 4 and there occurs no problem even if the parameter changing operation is performed as an offline operation of the mail processing system 4. Further, after the parameter changing operation of this embodiment is completed, the stored data can be used again since the answer thereof is already partially specified and may be discarded to totalize the newest number of mails.

In the above embodiment, the centralized information processing apparatus 1 transfers information with respect to one mail processing system, but may remotely transfer information with respect to a plurality of mail processing systems provided in a plurality of mail processing stations via communication lines.

At this time, the mail collection and delivery times are different in respective regions in some cases. Therefore, parameter values may be stored in different files depending on the time (time band) at which the centralized information processing apparatus 1 collects data and the parameter values may be separately managed.

Further, in the above embodiment, the centralized information processing apparatus 1 transfers information online with respect to the mail processing system via the communication path, but information transfer can be performed offline via a recording medium.

### [Effect]

According to the embodiment described above, various effects can be attained.
(1) Parameters related to the recognition result can be changed and the recognition precision can be enhanced by confirming an influence after the change without performing the recognition process itself while the recognition result and instruction result of the paper-sheet sorting machine and video coding system are used.
(2) At the time of confirmation of an influence of the parameter change, it is not necessary to confirm an image that is unnecessary at the adjustment confirmation time by displaying only an image that provides a difference in the result and information related thereto, and therefore, the effect of reducing the operation time can be attained. Further, since the adjustment can be made while the difference image is being watched, the adjustment is made to avoid the operation of erroneously reading the destination as a distant place such as a foreign country. Thus, the effect of finely customizing the operation by the user can be attained.
(3) Since remote adjustment can be made, the paper-sheet sorting machine can be customized in a distant place even if the operator does not go to the spot.
(4) Since data that can be recognized on the paper-sheet sorting machine side is acquired, the reduction effect due to the adjustment with respect to an object that is erroneously read on the paper-sheet sorting machine side can be confirmed and the actual erroneous read reduction operation can be achieved.

The functions explained in the above embodiments can be realized not only by forming the configurations by use of hardware but also by causing a computer to read a program having the functions recorded thereon by use of software. Further, the functions can be realized by adequately selecting and utilizing software and hardware.

This invention is not limited to the above embodiments as they are and can be embodied by modifying the constituents without departing from the scope thereof in the embodying stage.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A centralized information processing apparatus (1) comprising:
an information acquisition unit (10, 11) configured to acquire image data formed by reading sorting information described on a paper-like sheet by use of reading means, sort destinations arranged in an order from an upper position in which a score of a result of character recognition based on the image data is high to plural positions and score information items thereof, and sort information that is specified based on unrecognizable image data,
a recognition-rate processing unit (12) configured to provide information related to a recognition rate for each sorting destination based on the respective information items in a preset period,
a changed parameter value acquisition unit (10, 13) configured to acquire a new parameter value obtained by changing the parameter value configuring the score,
a simulation executing unit (13) configured to execute a simulation of a character recognition process for the image data by using the changed parameter value,
a difference list providing unit (14) configured to form and provide a difference list indicating different content between new sorting information obtained as the simulation result and original sorting information, and to urge the user to input information indicating whether the simulation result is accepted, and
a parameter changing unit (15) configured to change the parameter value to the new parameter value when information to the effect that the simulation result is accepted is input by the user.

2. The centralized information processing apparatus (1) according to claim 1, **characterized in that** the information related to the recognition rate includes the number of cases that have been recognized based on the image data for each sorting destination and the number of cases that is specified because the recognition is impossible.

3. The centralized information processing apparatus (1) according to claim 1 or 2, **characterized in that** the difference list includes the image data and sorting information specified by the user based on the image data included in the difference list.

4. The centralized information processing apparatus (1) according to claim 3, **characterized in that** the difference list further includes original sorting information acquired by the information acquisition unit, and further comprises an erroneous reading determination unit configured to determine that the original sorting information is erroneous reading information when the original sorting information of the difference list and the sorting information specified by the user are different from each other.

5. A centralized information processing system **characterized by** comprising:
a centralized information processing apparatus (1) according to any one of claims 1 to 4,
a paper-sheet sorting machine (5), and
video coding system (6),
wherein the information acquisition unit (10, 11) is configured to acquire image data formed by reading sorting information described on a paper-like sheet by use of the reading means of the paper-sheet sorting machine (5), sort destinations arranged in an order from an upper position in which a score of a result of character recognition based on a reading result of the reading means of the paper-sheet sorting machine (5) for the image data is high to plural positions and score information items thereof, and sort information that is specified by the video coding system (6) for unrecognizable image data from the paper-sheet sorting machine (5) and video coding system (6),
and the centralized information processing apparatus (1) further includes a parameter value output unit (15) configured to output the new parameter value to the paper-sheet sorting machine (5).

6. The centralized information processing system according to claim 5, **characterized by** further comprising a plurality of paper-sheet processing systems (4) each including the paper-sheet sorting machine (5) and video coding system (6), wherein the centralized information processing apparatus (1) is configured to transfer the information and data with the respective paper-sheet processing systems (4).
